# EUROPEAN PATENT APPLICATION

(11) **EP 4 542 967 A1**
(43) Date of publication of application: **23.04.2025**
(21) Application number: 23824102.0
(22) Date of filing: 18.05.2023
(51) Int. Cl.: H04L 67/1087, H04L 9/00

(54) **SYSTEM AND METHOD FOR CHANGING WORKING SHARD OF ACCOUNT IN BLOCKCHAIN NETWORK**

(30) Priority: 14.06.2022 KR 20220072023
(71) Applicant: Bloom Technology, Inc., Seongnam-si, Gyeonggi-do 13487 (KR)
(72) Inventor: JOO, Young Hyun, Yongin-si Gyeonggi-do 16862 (KR); LEE, Gil Ho, Seoul 06097 (KR)
(74) Representative: Murgitroyd & Company
(86) International application number: PCT/KR2023/006752
(87) International publication number: WO 2023/243881

(57) **Abstract**

The present disclosure relates to a system and method for changing a shard (working shard) with which an account is affiliated to another shard (working shard) in a blockchain network applying dynamic sharding technique. In the present disclosure, the node is a node affiliated with an origin working shard of a first moving account and communicates with a first home shard-affiliated node of the first moving account and a first destination working shard-affiliated node of the first moving account to perform a working shard change procedure for the first moving account. The node includes a working shard change detection unit that detects whether a working shard of the first moving account is changed, and a working shard change request unit that requests a working shard change for the first moving account to the first destination working shard-affiliated node.

## Description

### [TECHNICAL FIELD]

The present disclosure relates to a system and method for changing a working shard of an account in a blockchain network, and more specifically, to a system and method for changing a shard (working shard) with which an account is affiliated to another shard (working shard) in a blockchain network applying dynamic sharding technique.

### [BACKGROUND ART]

Blockchain is a decentralized distributed transaction management technology that emerged to break away from the traditional centralized method in which a centralized institution stores transaction details in a single point. Blockchain is a distributed ledger system that makes it impossible to forge or modify records by having all participants in a P2P (Peer-to-Peer) communication network own a shared ledger determined through a consensus algorithm. In other words, a distributed ledger system is a system in which each node synchronizes and maintains a database called a ledger in a distributed environment without the control of a central administrator.

In order for all nodes in the blockchain to maintain a synchronized ledger, all transactions and blocks occurring in the network must be stored. To this end, conventionally, all messages are propagated to all nodes in the blockchain network through a flooding method. However, this entails the problem of scalability, which is the problem that all nodes must receive and store every message.

To solve the scalability problem, a sharding method has recently been proposed in the blockchain field, which distributes multiple nodes to multiple shard groups and divides multiple transactions into each shard for parallel processing. Sharding is a method that divides transactions and blocks occurring in a blockchain network into small groups called shards to allow nodes belonging to each shard to process only the transactions and blocks of their own shard without having to process the transactions and blocks of other shards, thereby reducing the transaction processing volume of the entire network and the size of the distributed ledger.

However, with the introduction of sharding, the number of nodes for verifying transactions decreases in proportion to the number of shards, which increases the risk of data manipulation due to consensus attacks by malicious nodes. Consensus attacks are the most dangerous types of attacks on blockchains. In blockchains, a verification committee, which includes multiple nodes, basically verifies blocks through consensus of the majority of the committee, and blocks that fail to reach consensus are excluded from selection and removed from the chain.

In a typical blockchain, tens to hundreds of thousands of nodes are included in the verification committee, so it is realistically impossible for malicious nodes to occupy more than half. However, when sharding techniques are introduced, since the frequency of transactions, the number of nodes, and the ratio of validators differ for each shard, an imbalance may occur between shards over time, which may cause the stability of some shards to become vulnerable. In other words, there may be cases where malicious nodes occupy more than half in some shards, and if the number of malicious nodes exceeds half, there is a risk of false blocks being connected to the chain. When a sharding technique is applied, the number of nodes that an attacker needs to recruit is reduced, making it easier to recruit more than half of the nodes, which increases the risk of false blocks being connected to the chain.

To solve this problem, even after the shards have been defined, it is necessary to rearrange the members (nodes) of each shard to balance the shards. In addition, when the overall traffic of the blockchain network increases, it is necessary to increase the number of shards. The present applicant proposes a technique of rebalancing the members of shards and increasing the number of shards as a dynamic sharding technique.

Meanwhile, in a blockchain network that applies the sharding technique, accounts only share information about accounts belonging to their own shard and do not have information about accounts belonging to other shards. Therefore, for inter-shard transactions between accounts belonging to different shards, it is necessary to know the shard information of the counterpart account.

Accordingly, even if the shard to which an account belongs changes by applying the dynamic sharding technique, the shard information of the account should continue to be tracked and shared, and the shard information of the account should be retrievable during inter-shard transactions.

### [DETAILED DESCRIPTION OF INVENTION]

### [TECHNICAL PROBLEMS]

The objective of the present disclosure is to satisfy the above-mentioned needs, and to provide a system and method for changing the working shard of an account, which can track the change in the shard (working shard) of the account in a blockchain network to which the dynamic sharding technique is applied.

### [TECHNICAL SOLUTION]

The present disclosure can be implemented in various ways, including a device (system), a method, a computer program stored in a computer-readable medium, or a computer-readable medium having a computer program stored.

A system for changing a working shard of an account in a blockchain network, according to one embodiment of the present disclosure, is included in a node constituting the blockchain network. The node is a node affiliated with an origin working shard of a first moving account, and communicates with a first home shard-affiliated node of the first moving account and a first destination working shard-affiliated node of the first moving account to perform a working shard change procedure for the first moving account. The node comprises: a working shard change detection unit that detects whether a working shard of the first moving account is changed; and a working shard change request unit that requests a working shard change for the first moving account to the first destination working shard-affiliated node.

More preferably, the node further comprises: a home shard information acquisition unit that acquires home shard information of the first moving account; and a current working shard information acquisition unit that acquires current working shard information of the first moving account from the first home shard-affiliated node based on the home shard information of the first moving account, and the working shard change request unit requests a working shard change for the first moving account to the first destination working shard-affiliated node when the current working shard information of the first moving account does not match destination working shard information of the first moving account.

More preferably, the node further comprises an account deactivation processing unit that deactivates a transaction chain of the first moving account and terminates the working shard change procedure for the first moving account when the current working shard information of the first moving account matches the destination working shard information of the first moving account.

More preferably, the home shard information acquisition unit acquires the home shard information of the first moving account using a function that takes as parameters information on an address of the first moving account and information on a total number of shards in the blockchain network.

More preferably, the node communicates with the first home shard-affiliated node and the first destination working shard-affiliated node through peer-to-peer communication.

More preferably, the node is a node affiliated with a home shard of a second moving account, and communicates with a second origin working shard-affiliated node of the second moving account and a second destination working shard-affiliated node of the second moving account to perform a working shard change procedure for the second moving account.

The node further comprises: a working shard information request receiving unit that receives a request for current working shard information of the second moving account from at least one information request node of the second origin working shard-affiliated node and the second destination working shard-affiliated node; an account directory search unit that searches an account directory for the current working shard information of the second moving account; a search result sending unit that sends the current working shard information of the second moving account searched by the account directory search unit to the information request node; a working shard information change request receiving unit that receives a working shard information change request from the second destination working shard-affiliated node; and an account directory update unit that changes the current working shard information of the second moving account in the account directory to destination working shard information of the second moving account.

More preferably, the node communicates with the second origin working shard-affiliated node and the second destination working shard-affiliated node through peer-to-peer communication.

More preferably, the node is a node affiliated with a destination working shard of a third moving account, and communicates with a third origin working shard-affiliated node of the third moving account and a third home shard-affiliated node of the third moving account to perform a working shard change procedure for the third moving account. The node further comprises: a working shard change request receiving unit that receives a working shard change request for the third moving account from the third origin working shard-affiliated node of the third moving account; an account recording unit that records a transaction chain of the third moving account; a home shard information acquisition unit that acquires home shard information of the third moving account; and a working shard information change request sending unit that sends a working shard information change request to the third home shard-affiliated node based on the home shard information of the third moving account.

More preferably, the node further comprises a current working shard information acquisition unit that acquires current working shard information of the third moving account from the third home shard-affiliated node based on the home shard information of the third moving account, and the working shard information change request sending unit sends a working shard information change request to the third home shard-affiliated node when the current working shard information of the third moving account and destination working shard information of the third moving account do not match.

More preferably, when current working shard information of the third moving account matches destination working shard information of the third moving account, the node terminates the working shard change procedure for the third moving account.

More preferably, the home shard information acquisition unit acquires the home shard information of the third moving account using a function that takes as parameters information on an address of the third moving account and information on a total number of shards in the blockchain network.

More preferably, the node communicates with the third origin working shard-affiliated node and the third home shard-affiliated node through peer-to-peer communication.

Further, in a method for changing a working shard of an account, according to one embodiment of the present disclosure, implemented by at least one processor on a node constituting the blockchain network, wherein the node is a node affiliated with an origin working shard of a first moving account, and communicates with a first home shard-affiliated node of the first moving account and a first destination working shard-affiliated node of the first moving account to perform a working shard change procedure for the first moving account, the method comprises: detecting whether a working shard of the first moving account is changed; and requesting a working shard change for the first moving account to the first destination working shard-affiliated node.

More preferably, the method further comprises: acquiring home shard information of the first moving account; acquiring current working shard information of the first moving account from the first home shard-affiliated node based on the home shard information of the first moving account; and requesting a working shard change for the first moving account to the first destination working shard-affiliated node when the current working shard information of the first moving account does not match destination working shard information of the first moving account.

More preferably, the method further comprises deactivating a transaction chain of the first moving account and terminating the working shard change procedure for the first moving account when the current working shard information of the first moving account matches the destination working shard information of the first moving account.

More preferably, the acquiring of home shard information of the first moving account includes acquiring the home shard information of the first moving account using a function that takes as parameters information on an address of the first moving account and information on a total number of shards in the blockchain network.

More preferably, the node communicates with the first home shard-affiliated node and the first destination working shard-affiliated node through peer-to-peer communication.

More preferably, the node is a node affiliated with a home shard of a second moving account, and communicates with a second origin working shard-affiliated node of the second moving account and a second destination working shard-affiliated node of the second moving account to perform a working shard change procedure for the second moving account. The method for changing a working shard of an account further comprises: receiving a request for current working shard information of the second moving account from at least one information request node of the second origin working shard-affiliated node and the second destination working shard-affiliated node; searching an account directory for the current working shard information of the second moving account; sending the searched current working shard information of the second moving account to the information request node; receiving a working shard information change request from the second destination working shard-affiliated node; and changing the current working shard information of the second moving account in the account directory to destination working shard information of the second moving account.

More preferably, the node communicates with the second origin working shard-affiliated node and the second destination working shard-affiliated node through peer-to-peer communication.

More preferably, the node is a node affiliated with a destination working shard of a third moving account, and communicates with a third origin working shard-affiliated node of the third moving account and a third home shard-affiliated node of the third moving account to perform a working shard change procedure for the third moving account. The method for changing a working shard of an account further comprises: receiving a working shard change request for the third moving account from the third origin working shard-affiliated node of the third moving account; recording a transaction chain of the third moving account; acquiring home shard information of the third moving account; and sending a working shard information change request to the third home shard-affiliated node based on the home shard information of the third moving account.

More preferably, the method further comprises: acquiring current working shard information of the third moving account from the third home shard-affiliated node based on the home shard information of the third moving account; and sending a working shard information change request to the third home shard-affiliated node when the current working shard information of the third moving account and destination working shard information of the third moving account do not match.

More preferably, when the current working shard information of the third moving account matches the destination working shard information of the third moving account, the working shard change procedure for the third moving account is terminated.

More preferably, the acquiring of home shard information of the third moving account includes acquiring the home shard information of the third moving account using a function that takes as parameters information on an address of the third moving account and information on a total number of shards in the blockchain network.

More preferably, the node communicates with the third origin working shard-affiliated node and the third home shard-affiliated node through peer-to-peer communication.

### [EFFECT OF INVENTION]

According to the present disclosure, the following effects are achieved.

By dividing a blockchain network into shard units to process transactions and blocks, the present disclosure can reduce the transaction processing volume and the size of the distributed ledger, which increases the scalability of the blockchain network.

The present disclosure can block the risk of malicious nodes being concentrated in any shard by periodically and randomly changing and rebalancing nodes and/or accounts belonging to the shards.

By introducing the concept of a home shard and a working shard, enabling the home shard information of an arbitrary account to be derived by computation, storing information of the working shard, which is the shard to which the account currently belongs, in the home shard of the account, and updating the changed working shard information in the home shard of the account when an arbitrary account changes the working shard, the present disclosure enables the tracking of the working shard of the account even when the account moves between the working shards.

The effects of the present disclosure are not limited to those mentioned above, and other effects not mentioned can be clearly understood from the description of the claims by a person having ordinary knowledge in the art to which the present disclosure pertains (hereinafter referred to as "those skilled in the art").

### [BRIEF DESCRIPTION OF THE DRAWING]

Embodiments of the present disclosure will be described with reference to the accompanying drawings, in which like reference numerals represent like components, but the present is not limited thereto.
FIG. 1 is a diagram illustrating a conceptual diagram of a blockchain network divided into three shards according to the present disclosure.
FIG. 2 is a block diagram illustrating an exemplary configuration of a node including a transaction system of an account according to the present disclosure.
FIG. 3 is a diagram illustrating information stored in a data storage to implement a transaction system of an account according to the present disclosure.
FIG. 4 is a diagram illustrating a configuration of a system for changing the working shard of an account according to one embodiment of the present disclosure.
FIG. 5 is a flowchart illustrating a system for changing the working shard of an account according to one embodiment of the present disclosure.

### (Description of Reference Numerals)

222: account transaction system 224: account management module
226: peer-to-peer communication module 228: working shard change module
230: transaction processing module 232: home shard calculation module
411: working shard change detection unit 412: home shard information acquisition unit
413: current working shard information acquisition unit 414: working shard change request unit
415: account deactivation processing unit 421: working shard information request receiving unit
422: account directory search unit 423: search result sending unit
424: working shard information change request receiving unit 425: account directory update unit
431: working shard change request receiving unit 432: account recording unit
433: home shard information acquisition unit 434: current working shard information acquisition unit
435: working shard information change request sending unit

Embodiments of the present disclosure will be described with reference to the accompanying drawings, in which like reference numerals represent like components, but the present disclosure is not limited thereto.

### [MODE FOR CARRYING OUT THE INVENTION]

Hereinafter, specific details for implementing the present disclosure will be described in detail with reference to the accompanying drawings. However, in the following description, specific descriptions of widely known functions or configurations will be omitted if they may unnecessarily obscure the gist of the present disclosure.

In the accompanying drawings, identical or corresponding components are given the same reference numerals. In addition, in the following description of the embodiments, duplicate description of identical or corresponding components may be omitted. However, the omission of the description of a component does not intend that such a component is not included in any embodiment.

The advantages and features of the embodiments disclosed in the present specification, and the methods for achieving them, will become apparent by referring to the embodiments described below in conjunction with the accompanying drawings. However, the present disclosure is not limited to the embodiments disclosed below, but may be implemented in various different forms, and these embodiments are only provided to fully inform those skilled in the art related to the present disclosure of the scope of the present disclosure.

Unless otherwise defined, all terms (including technical and scientific terms) used in the present specification may be used with a meaning that can be commonly understood by those skilled in the art to which the present disclosure pertains. In addition, terms defined in commonly used dictionaries should not be ideally or excessively interpreted unless explicitly specifically defined.

For example, the term "technique" may refer to systems, methods, computer-readable instructions, modules, algorithms, hardware logic, and/or operations as permitted by the context described above and throughout the entire document.

The terms used in the present specification will be briefly explained, followed by a detailed description of the disclosed embodiments. The terms used in the present specification have been selected from widely used general terms as much as possible while considering the functions in the present disclosure, but this may vary depending on the intention of engineers engaged in the relevant field, precedents, or the emergence of new technologies. In addition, in certain cases, there are terms arbitrarily selected by the applicant, and in this case, the meanings thereof will be described in detail in the relevant description of the disclosure. Therefore, the terms used in the present disclosure should be defined based on the meanings of the terms and the overall contents of the present disclosure, rather than simply the names of the terms.

In the present specification, singular expressions include plural expressions unless the context clearly specifies that they are singular. In addition, plural expressions include singular expressions unless the context clearly specifies that they are plural. Throughout the specification, when a part is described as including a certain component, this means that, unless explicitly stated otherwise, other components are not excluded and may also be included.

In the present disclosure, terms such as "include," "comprising," and the like may indicate the presence of features, operations, elements, and or components, but do not exclude the possibility of the addition of one or more other functions, operations, elements, components, and/or combinations thereof.

In the present disclosure, when a specific component is referred to as being "coupled," "combined," "connected," "associated," or "reacting" with any other component, the specific component may be directly coupled, combined, connected, and/or associated with, or reacting with, the other component, but the present disclosure is not limited thereto. For example, one or more intermediate components may exist between the specific component and the other component. Furthermore, "and/or" in the present disclosure may include each of one or more items listed or a combination of at least some of the one or more items listed.

In the present disclosure, terms such as "first", "second", etc. are used to distinguish specific components from other components, and such terms do not limit the components described. For example, a "first" component may be used to refer to a component identical or similar in form to a "second" component.

In the present disclosure, a 'blockchain network' refers to a group of multiple computers (nodes) that participate in a blockchain system and communicate with each other peer-to-peer via the Internet, etc., and a 'node' in the present disclosure may be a computer that participates in the blockchain network. Here, computer is a comprehensive term for all devices having CPU, memory, communication, and input/output functions, and specifically may include a server computer, a personal computer (PC), a mobile phone terminal, a small home appliance, etc.

Nodes can share and spread information through the blockchain network. Nodes manage user accounts. Accounts managed by nodes may include accounts of node owners (hereinafter referred to as host accounts) and accounts entrusted for management by other users (hereinafter referred to as guest accounts). A node may store all information about host accounts and guest accounts it manages, transmit them to other nodes in the blockchain network, and receive updated information about host accounts and guest accounts managed by each of the other nodes.

In the present disclosure, the term 'account' refers to a user account participating in a blockchain, and may be a data structure representing a user. An account may add information to a blockchain system by issuing transaction, and may be a linked list of transactions issued by a user. A transaction may be a unit of data that a user adds to the system. An account may own a node and directly manage its own transaction information, and such an account may be referred to as a host account. Alternatively, an account may entrust another user's node to manage its transaction information, and such an account may be referred to as a guest account, and the node entrusted with account management may be referred to as a delegate node. Node and account authentication may be performed using an encryption key, and transactions may be signed using the same encryption key. A guest account may operate a node by itself to become a host account, or may change its delegate node, and a host account may select a delegate node to become a guest account.

In the present disclosure, a 'transaction' refers to a unit of information added to the blockchain, which can be issued by one account alone. The content of a transaction is nominally arbitrary information provided by a user, and may actually be a meaningful message within the system. For example, a transaction may include messages such as "Account A sent 100 coins to Account B", "Account B received 100 coins from Account A", etc. In the present disclosure, the serial numbers of the transaction start from 0 and increase by 1 for each transaction, and an Account-Wise Transaction Chain (AWTC) that manages a ledger for each account is used. The technology for the Account-Wise Transaction Chain (AWTC) can be understood by referring to the contents described in Korean Patent Application Publication No. 2021-0015196.

In the present disclosure, a 'block' may be a signed list of transactions added to a shard or blockchain network during a specific period of time. A block may be created by signing a list of generated transactions through a consensus algorithm. Only one block may be created at a time, and a blockchain may be constructed by adding a new block to the existing list of blocks.

In the present disclosure, a 'shard' may be a subset of nodes participating in a blockchain network. The entire blockchain network is generally divided into two or more shards, and if not divided, all nodes are considered to participate in one shard, and each shard has a unique address. Typically, in a blockchain network that applies the sharding technique, nodes belonging to the same shard communicate peer-to-peer with each other, and share the Account-Specific Transaction Chain (AWTC) of all accounts belonging to the same shard.

In the present disclosure, every account can have one working shard and one home shard. The working shard and the home shard of any account may be the same or different from each other. In the present disclosure, the 'home shard' of an account may be computed based on a function that takes the address of the account and the total number of shards as parameters. In the present disclosure, the 'working shard' of an account is a shard to which the account currently belongs and operates, and may be a typical shard. That is, in a blockchain network that applies conventional shard techniques, nodes in the same shard communicate with each other peer-to-peer, and the ledgers of all accounts belonging to the same shard are shared. On the other hand, in a blockchain network that applies the present disclosure, nodes in the same working shard may communicate with each other peer-to-peer, and share the Account-Wise Transaction Chain (AWTC) of all accounts belonging to the same working shard.

In the present disclosure, an 'intra-shard transaction' may refer to a transaction between nodes having the same working shard. In the present disclosure, an 'inter-shard transaction' may refer to a transaction between nodes having different working shards.

Each shard can have a set of nodes and accounts that have the corresponding shard as their home shard, and a set of nodes and accounts that have the corresponding shard as their working shard. Each node and account should belong to one working shard.

A node can change its affiliated working shard from one working shard to another, and when a node changes its working shard, the host accounts and guest accounts managed by the node can change their working shards simultaneously. For example, each node belonging to the blockchain network includes a shard rebalancing algorithm, and when certain conditions are met, the shard rebalancing algorithm can be executed to change the working shard of the corresponding node and account.

Meanwhile, any account may change its affiliated working shard from one working shard to another, independently of the node. For example, when an account previously managed by any node changes its delegated node to a node belonging to another working shard, or when any host account is newly delegated to a node belonging to another working shard, or when any guest account itself operates a node and becomes a host account, the account can change its affiliated working shard independently of its previous node.

In the present disclosure, 'peer-to-peer communication' in the blockchain network and shards may mean that when a node receives some information, it replicates the received information and transmits it to other nodes, and the node receiving the information also replicates the information and transmits it to other nodes, repeating this process so that after a sufficient period of time, all nodes belonging to the blockchain network and shards share the information.

In the present disclosure, a 'neighbor shard' of a shard may be a shard having an address whose bit distance is 1 from the address of the corresponding shard. A bit distance of 1 means that when comparing two binary values digit by digit, only one digit value is different. For example, for binary value '0101', a binary value that differs only in the 1st digit value is '0100', a binary value that differs only in the 2nd digit value is '0111', a binary value that differs only in the 3rd digit value is '0001', and a binary value that differs only in the 4th digit value is '1101'. Therefore, for binary value '0101', binary value '0100', binary value '0111', binary value '0001', and binary value '1101' are all binary values that differ only in one digit value. In this way, in the present disclosure, a binary value that differs in only one digit for any binary value is defined as having a bit distance of 1, and a shard with an address having a bit distance of 1 from the address of any shard is defined as a neighbor shard.

The operating system described below constitutes one embodiment, but is not intended to limit the scope of the claims to any one particular operating environment. The present disclosure may be applied in other environments without departing from the technical idea and scope of the claimed subject matter.

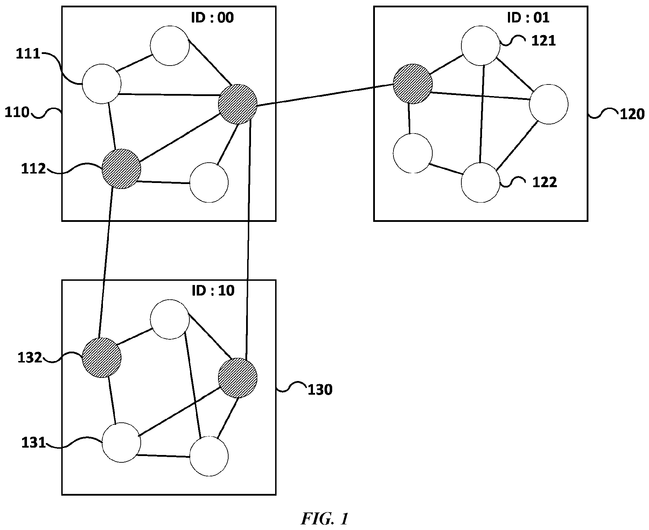

FIG. 1 is a diagram illustrating a conceptual diagram of a blockchain network divided into three shards according to the present disclosure.

A plurality of nodes that make up a blockchain network may be divided into three shards 110, 120, 130, but the present disclosure is not limited thereto. The number of shards may increase as the number of nodes and accounts in the blockchain network increases, and in this case, a single shard may be divided into two. Each shard 110, 120, 130 may be a working shard of nodes currently affiliated with it. All nodes currently affiliated with the working shard may all share the same information.

Each node may include an intra-shard communication node list that stores information on peer-to-peer communication targets (intra-shard communication nodes) among the nodes within the working shard, and an inter-shard communication node list that stores information on peer-to-peer communication targets (inter-shard communication nodes) among the nodes outside the working shard.

The intra-shard communication nodes, which are the communication targets within the working shard of each node, may be determined according to Kademlia rules. The inter-shard communication nodes, which are the communication target outside the working shard of each node, may be randomly determined as some of the nodes belonging to the neighbor shards.

Based on the intra-shard communication node list and inter-shard communication node list determined in this way, information sharing through peer-to-peer communication within and outside the working shard becomes possible. A node may have different information to share with the intra-shard communication nodes from information to share with the inter-shard communication nodes. In other words, information shared with the inter-shard communication nodes may be more limited than information shared with the intra-shard communication nodes. The intra-shard communication nodes and inter-shard communication nodes included in the intra-shard communication node list and inter-shard communication node list assigned to each node may be randomly reconfigured.

In FIG. 1, nodes 111, 121, 131 communicating with nodes within the working shard are indicated by unhatched circles, and nodes 112, 122, 132 communicating with nodes outside the working shard are indicated by hatched circles. Nodes 112, 122, 132 communicating with nodes outside the working shard can communicate with nodes belonging to neighbor shards based on the inter-shard communication node list. Here, a neighbor shard may be a shard whose address has a bit distance of 1. A bit distance of 1 may mean that the address of the shard differs only in one digit value. That is, addresses having a bit distance of 1 from address '00' may be '01' and '10'.

In the example of FIG. 1, when the address of a first shard 110 is '00', the address of a second shard 120 is '01', and the address of a third shard 130 is '10', the address '00' of the first shard 110 and the address '01' of the second shard 120 have a bit distance of 1, and the address '00' of the first shard 110 and the address '10' of the third shard 130 have a bit distance of 1. However, the address '01' of the second shard 110 and the address '10' of the third shard 130 are different in two digit values, so that they do not have a bit distance of 1.

Therefore, the first and second shards are neighboring shards and can communicate directly, and the first and third shards are neighboring shards and can communicate directly. However, since the second and third shards are not neighboring shards, they cannot communicate directly and can communicate through the first shard, which is their neighbor shard.

Each node in FIG. 1 includes a shard rebalancing algorithm, and the shard rebalancing algorithm may be executed according to preset conditions. The shard rebalancing algorithm may use the Bounded Cuckoo algorithm, but is not limited thereto. The Bounded Cuckoo algorithm is described in detail in the RapidChain introduction material (see RapidChain: Scaling Blockchain via Full Sharding, https://eprint.iacr.org/2018/460.pdf). In the present disclosure, the health index of shards may be calculated based on the Bounded Cuckoo algorithm to be classified into strong shards and weak shards, and some nodes are periodically randomly extracted from the strong shards and moved to the weak shards.

When the shard rebalancing algorithm is executed, nodes to change their working shards are randomly selected, and the working shards of the nodes may be reallocated and changed. When the working shard of a node is changed, the corresponding node can perform the working shard change procedure for all host accounts and guest accounts that it manages.

In addition, a node may perform individually the working shard change procedure for the host accounts and guest accounts that it manages. For example, when a node changes a guest account, under its delegated management, belonging to a different working shard, the node may perform the working shard change procedure for the corresponding guest account. Alternatively, when a node takes on the delegated management of a third account previously managed by a node belonging to a different working shard, the node may perform the working shard change procedure for the third account.

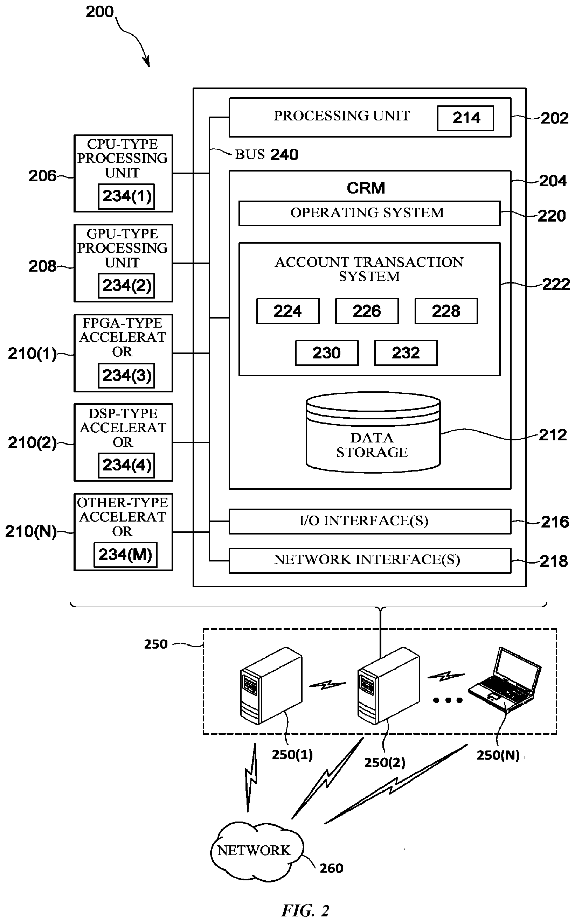

FIG. 2 is a block diagram illustrating an exemplary configuration of a node 200 including a transaction system of an account according to the present disclosure. Each node may be implemented as a computer device.

In some examples, various devices and/or components of the node 200 may include distributed computer resources 250 that can communicate with each other and external devices via one or more networks 260.

In various embodiments, the distributed computer resources 250 may include devices 250(1) to 250(N).

Embodiments of the present disclosure support scenarios in which the distributed computer resources 250 may include one or more computer devices for operating in a cluster or other grouped configuration to share resources, distributing load, increasing performance, or for other purposes.

The distributed computer resources 250 may encompass a variety of device categories, including traditional server-type devices, desktop computer-type devices, mobile devices, special-purpose devices, embedded devices, and/or wearable devices. Thus, although described as desktop and laptop computers, the distributed computer resources 250 may include a variety of device types and are not limited to a particular type of device. The distributed computer resources 250 may be integrated components for inclusion in a desktop computer, a server computer, a web server computer, a personal computer, a mobile computer, a laptop computer, a tablet computer, a wearable computer, an implantable computer, a communication device, an automotive computer, a network-enabled television, a thin client, a terminal, a PDA, a game console, a game device, a workstation, a media player, a personal video recorder (PVR), a set-top box, a camera, or a computing device.

The node 200 may be a single computer device that is a distributed computer resource 250. The node 200 may include any type of computer device having one or more processing units 202 operably connected to computer readable media (CRM) 204 via a bus 240, and in some cases, may include one or more of the above. The bus 240 may include a system bus, a data bus, an address bus, a PCI bus, a mini PCI bus, and various local, peripheral, and/or independent buses.

In the node 200, the processing unit 202 may include, for example, a CPU-type processing unit, a GPU-type processing unit, a field programmable gate array (FPGA), a digital signal processor (DSP), or other hardware logic component that can be driven by a CPU.

For example, such hardware logic components may include application-specific integrated circuits (ASICs), application-specific standard products (ASPs), system-on-a-chip (SOC) systems, complex programmable logic devices (CPLDs), etc. Specifically, the CRM 204 may store instructions executable by an external processing unit 208, such as an external CPU-type processing unit 206, or an external GPU-type processing unit 208, and/or an external accelerator 210, such as an FPGA-type accelerator 210(1), a DSP-type accelerator 210(2), or other accelerator 210(N).

The CRM 204 described herein may include computer storage media and/or communication media.

The computer storage media may include any type of storage unit, removable and non-removable computer storage medium, such as volatile memory, non-volatile memory, and/or other permanent or auxiliary computer storage mediums implemented by any method or technology for storage of information such as computer-readable instructions, data structures, program modules or other data.

The computer storage media may be RAM, static RAM (SRAM), dynamic RAM (DRAM), phase change memory (PRAM), read-only memory (ROM), erasable programmable read-only memory (EPROM), electrically erasable programmable read-only memory (EEPROM), flash memory, DVDs, optical storage media, magnetic cassettes, magnetic tape, solid state memory (SSD), etc.

Executable instructions stored in the CRM 204 may include other modules, programs or applications that are loadable and executable by an operating system 220 and the processing unit 202.

Additionally or alternatively, what is functionally described herein may be performed at least in part by one or more hardware logic components, such as an accelerator.

For example, exemplary types of hardware logic components that may be used include field-programmable gate arrays (FPGAs), application-specific integrated circuits (ASICs), application-specific standard products (ASSPs), system-on-a chip system (SOC), complex programmable logic devices (CPLDs), etc. For example, the accelerator may be a hybrid device from XILINX or ALTERA that includes a CPU embedded in an FPGA fabric.

In the illustrated embodiment, the CRM 204 may also include a data storage 212. In some embodiments, the data storage 212 may include a data storage such as a database, a data warehouse, or other type of structured or unstructured data storage.

In some embodiments, the data storage 212 may include a corpus and/or a relational database having one or more tables that enable data access, such as web tables including one or more HyperText Markup Language (HTML) tables, Resource Description Framework (RDF) tables, Web Ontology Language (OWL) tables, and/or Extensible Markup Language (XML) tables, indexes, stored procedures, etc.

For example, the data storage 212 may store data and/or instructions for the operation of processes, applications, components and/or modules stored in the CRM 204 and executed by the processing unit 202.

The node 200 may further include one or more input/output (I/O) interfaces 216, wherein the I/O interfaces 216 enables the node 200 to communicate with user input devices including peripheral input devices (e.g., a keyboard, a mouse, a pen, a game controller, a voice input device, a touch input device, a gesture input device, a camera, etc.) and input/output devices that can communicate with peripheral output devices (e.g., a display, a printer, etc.).

In addition, the node 200 may be a node of a blockchain network and may further include one or more input/output (I/O) network interfaces 218 that enable the node 200 to communicate with other nodes of the blockchain network via the network 260.

The input/output (I/O) network interfaces 218 may include one or more network interface controllers (NICs) or other types of transceiver devices for transmitting and receiving communications over the network 260.

The network 260 may include a public network, such as the Internet, a private network, such as institutional and/or personal intranet, or a combination of private and public networks. The network 260 may include any type of wired and/or wireless network including, but not limited to, a local area network (LAN), a wide area network (WAN), a satellite network, a cable network, a Wi-Fi network, and a WiMax network, a mobile communication network (e.g., 3G, 4G, 5G, etc.), or any combination thereof. The network 260 may utilize communication protocols including packet-based and/or datagram-based protocols, such as Internet Protocol (IP), Transmission Control Protocol (TCP), User Datagram Protocol (UDP), or other types of protocols.

Furthermore, the network 260 may include various devices that facilitate network communications or form the hardware foundation for the network, such as switches, routers, gateways, access points, firewalls, base stations, repeaters, and backbone devices.

In some embodiments, the network 260 may further include devices that enable connection to a wireless network, such as a wireless access point (WAP). Embodiments according to the present disclosure may include a WAP that supports the Institute of Electrical and Electronics Engineers (IEEE) 802.11 standard (e.g., 802.11g, 802.11n, etc.) to support connection via the WAP that transmits and receives data over various electromagnetic frequencies (e.g., radio frequencies).

In the illustrated embodiment, the CRM 204 may include an operating system 220 and an account transaction system 222. The account transaction system 222 may include one or more modules and/or APIs illustrated as blocks 224, 226, 228, 230, and 232, but this is merely illustrative and the number of modules and/or APIs may be greater or less. The functions described with respect to each block 224, 226, 228, 230, and 232 may be combined to be performed by fewer modules and/or APIs, or may be divided to be performed by a greater number of modules and/or APIs.

Alternatively, some or all of the operating system, data stored in the data store, and the transaction system of the account may be stored in a separate memory 234, such as memory 214 on the processing unit 202, memory 234(1) on the CPU-type processing unit 206, memory 234(2) on the GPU-type processing unit 208, memory 234(3) on the FPGA-type accelerator 210(1), memory 234(4) on the DSP-type accelerator 210(2), and/or memory 234(M) on other accelerator 210(N).

The transaction system 222 of the account may include an account management module 224, a peer-to-peer communication module 226, a working shard change module 228, a transaction processing module 230, and a home shard calculation module 232.

The account management module 224 can manage host accounts and guest accounts. The account management module 224 can receive and store the Account-Wise Transaction Chain (AWTC) for all accounts belonging to the same working shard.

The peer-to-peer communication module 226 can transmit any message generated within the working shard to other nodes within the working shard and to nodes outside the working shard through peer-to-peer communication based on the intra-shard communication node list and the inter-shard communication node list. The peer-to-peer communication module 226 can process messages generated in the node itself or messages shared from other nodes or share the messages with other nodes. This message sharing may be performed across multiple nodes, but for convenience, the procedure for sharing the message will be omitted.

When the working shard of any account is changed, the working shard change module 228 can update the working shard information stored in the home shard of the account with the changed working shard information. In this case, the account whose working shard is changed may be called a moving account, the working shard of the moving account before the change may be called an origin working shard, and the working shard of the moving account after the change may be called a destination working shard.

For example, when the working shard of a moving account is changed from the origin working shard to the destination working shard, the nodes having the home shard of the moving account as their working shard, the nodes having the origin working shard of the moving account as their working shard, and the nodes having the destination working shard of the moving account as their working shard can perform different working chard change operations to change the working shard information stored in the home shard of the moving account from the origin working shard to the destination working shard.

Hereinafter, in the present disclosure, a node that has the home shard of the moving account as its working shard is called a home shard-affiliated node, a node that has the origin working shard of the moving account as its working shard is called an origin working shard-affiliated node (a node that belongs to the same working shard as the moving account before the change), and a node that has the destination working shard of the moving account as its working shard (a node that belongs to the same working shard as the moving account after the change) is called a destination working shard-affiliated node.

Accordingly, the working shard change module 228 can perform different working shard change operations by determining whether the node it operates on is a home shard-affiliated node, an origin working shard-affiliated node, or a destination working shard-affiliated node.

In the example of FIG. 1, when the home shard of any account managed in node 111 is the second shard 120, information on the first shard 110 is stored as the working shard information of the corresponding account in node 121 and node 122 that have the second shard 120 as their working shard. Meanwhile, when the working shard of this account (moving account) is changed from the first shard 110 to the third shard 130, the working shard information of the moving account stored in node 121 and node 122 is changed from the first shard 110 to the third shard 130. In this case, nodes 111, 112 affiliated with the first shard 110, which is the working shard before the change of the moving account, nodes 121, 122 affiliated with the second shard 120, which is the home shard of the moving account, and nodes 131, 132 affiliated with the third shard 130, which is the working shard after the change of the moving account, perform different working shard change operations, thereby performing the working shard change of the moving account according to the present disclosure.

The transaction processing module 230 can process a transaction between any two accounts. The transaction processing module 230 can process an intra-shard transaction when the two accounts belong to the same working shard, and an inter-shard transaction when the two accounts belong to different working shards. In this case, the account that attempts the transaction may be called a sender account, and the account that is the target of the transaction may be called a receiver account, and the node that manages the sender account (the sender node), the node that belongs to the home shard of the receiver account (the node that has the home shard of the receiver account as the working shard), and the node that manages the receiver account (the receiver node) may each operate differently.

The home shard calculation module 232 can compute the home shard address of any account based on information on the account address and the total number of shards. The home shard calculation module 232 can be driven by a working shard change module 282 and the transaction processing module 230, and when the working shard change module 282 requests the home shard information of a moving account or the transaction processing module 230 requests the home shard information of a receiver account, the home shard calculation module 232 can compute the home shard address of the corresponding account by applying the address of the account and the total number of shards to a function that takes the address of the account and the total number of shards as parameters.

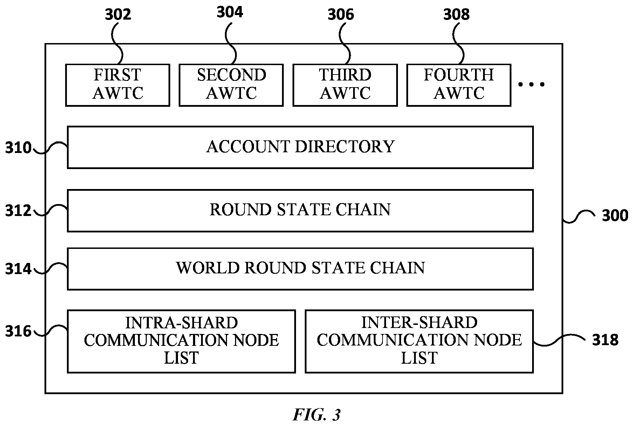

FIG. 3 is a diagram illustrating information stored in a data storage 300 to implement a transaction system of an account according to the present disclosure.

The data storage 300 of the node may store Account-Wise transaction Chains (AWTC) 302, 304, 306, 308 of all accounts belonging to the working shard of the node, an account directory 310 storing working shard history for accounts that have the working shard of the node as their home shard, a round state chain 312 combining account-specific transactions of all accounts belonging to the working shard and storing a chain of round state blocks agreed upon by all nodes belonging to the working shard as a chain, a world round state chain 314 combining all round state blocks belonging to the blockchain network and storing a chain of world round state blocks agreed upon, an intra-shard communication node list 316 storing information on communication target nodes within the working shard of the node, and an inter-shard communication node list 318 storing information on communication target nodes outside the working shard of the node.

The account directory 310 stores working shard history for accounts that have the working shard of the node as their home shard. In this example, for convenience, it is assumed that each node manages only one account, that is, a host account. Therefore, in this example, a node may be equivalent to an account. For example, in the example of FIG. 1, if the home shard of an account managed by node 111 is the second shard 120, information on the first shard 110 is stored as working shard information of the account managed by node 111 in the account directories of node 121 and node 122 that have the second shard 120 as their working shard. Meanwhile, in the example of FIG. 1, if the home shard of the account managed by node 112 is the third shard 130, the information on the first shard 110 is stored as the working shard information of the account managed by node 112 in the account directories of node 131 and node 132 that have the third shard as the working shard.

As explained above, nodes and accounts can change their working shards. If the working shard is changed in this way, the working shard change module of the present disclosure is operated so that the changed working shard information can be updated in the nodes belonging to the home shard of the corresponding account.

In the present disclosure, it is preferable that the account directories of nodes with which the home shard of any account is affiliated are updated with the latest working shard address of the corresponding account by the working shard change module.

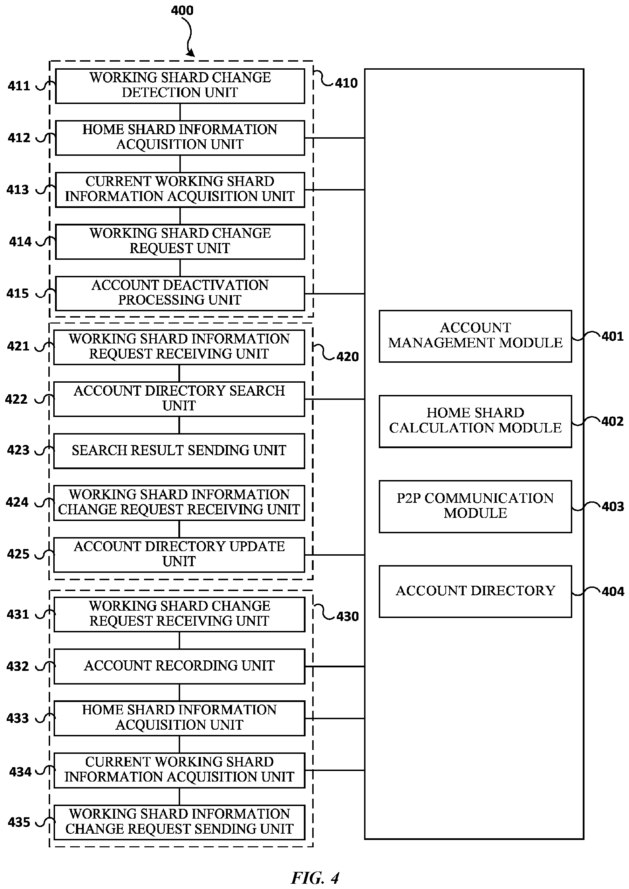

FIG. 4 is a configuration diagram illustrating a working shard change system 400 of an account according to one embodiment of the present disclosure. The working shard change system 400 may be implemented by a computer system of a node, and the working shard change system 400 of the account in FIG. 4 may be the working shard change module in FIG. 2.

In order to implement the working shard change system of the present disclosure, a node includes an account management module 401 that stores and manages an account-wise transaction chain (AWTC) for all accounts belonging to the same working shard, a home shard calculation module 402 that calculates a home shard address of any account based on information on the account address and the total number of shards, a peer-to-peer communication module 403 that transmits a message to other nodes within the working shard and nodes outside the working shard through peer-to-peer communication based on an intra-shard communication node list and an inter-shard communication node list, and an account directory 404 that stores working shard history information of accounts that have the working shard of the node as their home shard.

In the present disclosure, an account that changes its working shard may be referred to as a moving account, the working shard of the moving account before the change may be referred to as an origin working shard, and the working shard of the moving account after the change may be referred to as a destination working shard. When the working shard of the moving account is changed from the origin working shard to the destination working shard, nodes that have the home shard of the moving account as their working shard (home shard-affiliated nodes), nodes that have the origin working shard of the moving account as their working shard (origin working shard-affiliated nodes), and nodes that have the destination working shard of the moving account as their working shard (destination working shard-affiliated nodes), may perform different working shard change operations.

In other words, each node may include a working shard change module 410 as an origin working shard-affiliated node, a working shard change module 420 as a home shard-affiliated node, and a working shard change module 430 as a destination working shard-affiliated node, and may operate different working shard change modules by determining whether it is the home shard-affiliated node, the origin working shard-affiliated node, or the destination working shard-affiliated node.

The working shard change module 410 as the origin working shard-affiliated node includes a working shard change detection unit 411 that detects whether the working shard of any moving account affiliated with the same working shard is changed, and a working shard change request unit 414 that requests the working shard change of the moving account to a destination working shard-affiliated node.

The working shard change module 410 as the origin working shard-affiliated node further includes a home shard information acquisition unit 412 that acquires home shard information of the moving account through the home shard calculation module 402, and a current working shard information acquisition unit 413 that requests current working shard information of the moving account to the home shard-affiliated node based on the home shard information of the moving account and acquires the current working shard information of the moving account.

When the current working shard information of the moving account acquired by the current working shard information acquisition unit 413 is different from the destination working shard information, the working shard change request unit 414 re-requests the working shard change of the moving account to the destination working shard-affiliated node and then reactivates the current working shard information acquisition unit 413.

The working shard change module 410 as the origin working shard-affiliated node further includes an account deactivation processing unit 415 that deactivates the transaction chain of the moving account when the current working shard information of the moving account acquired by the current working shard information acquisition unit 413 matches the destination working shard information.

The working shard change module 420 as the home shard-affiliated node includes a working shard information request receiving unit 421 that receives a request for current working shard information of a moving account from at least one information request node of the origin working shard-affiliated node and the destination working shard-affiliated node, an account directory search unit 422 that searches the account directory 404 for current working shard information of the moving account, a search result sending unit 423 that sends the searched current working shard information of the moving account to the information request node, a working shard information change request receiving unit 424 that receives a working shard information change request from the destination working shard-affiliated node, and an account directory update unit 425 that verifies the working shard information change request and then changes the current working shard information of the moving account in the account directory 404 to the destination working shard.

The working shard change module 430 as the destination working shard-affiliated node includes a working shard change request receiving unit 431 that receives a working shard change request for the moving account from the origin working shard-affiliated node, an account recording unit 432 that verifies the request for changing the working shard of the moving account and then records the transaction chain of the moving account, a home shard information acquisition unit 433 that acquires home shard information of the moving account through the home shard calculation module 402, and a working shard information change request sending unit 435 that sends a working shard information change request to the home shard-affiliated node based on the home shard information of the moving account.

The working shard change module 430 as the destination working shard-affiliated node further includes a current working shard information acquisition unit 434 that requests the current working shard information of the moving account to the home shard-affiliated node and acquires the current working shard information of the moving account, and the working shard information change request sending unit 435 may send a working shard information change request to the home shard-affiliated node when the current working shard information of the moving account acquired by the current working shard information acquisition unit 434 does not match the destination working shard information.

First, when a node is an origin working shard-affiliated node, the node activates the working shard change module 410 as the origin working shard-affiliated node to change the working shard of the moving account. The operation of each component of the working shard change module 410 as the origin working shard-affiliated node will be described. In this case, the moving account is called a first moving account, the origin working shard-affiliated node is called a first origin working shard-affiliated node, the home shard-affiliated node is called a first home shard-affiliated node, and the destination working shard-affiliated node is called a first destination working shard-affiliated node. In other words, the node may be the origin working shard-affiliated node of the first moving account.

When a reason for a working shard move arises for any first moving account affiliated with the same working shard and the reason for the working shard move is included in the round state (RS) and confirmed, the working shard change detection unit 411 detects this and causes the working shard change operation to be performed. As mentioned above, the reason for a working shard move may include shard reallocation of nodes by the shard rebalancing algorithm, a guest account changing to a host account, a guest account changing its delegated node, a host account changing to a guest account, etc. The working shard change request unit 414 may generate a working shard change message for the first moving account and send it to the first destination working shard-affiliated node through the peer-to-peer communication module 403.

When a preset period of time has elapsed after sending a message to change the working shard of the first moving account, the home shard information acquisition unit 412 may request the home shard information of the first moving account to the home shard calculation module 402 and receive the home shard information of the first moving account from the home shard calculation module 402. The home shard calculation unit 402 may compute the home shard information of the first moving account using a function that takes as parameters information on the address of the first moving account and information on the total number of shards in the blockchain network.

The current working shard information acquisition unit 413 may generate a working shard information request message for the first moving account based on the home shard information of the first moving account and sends it to the home shard-affiliated node through the peer-to-peer communication module 403, and may receive the current working shard information of the first moving account from the home shard-affiliated node. In this case, the peer-to-peer communication module 403 sends the working shard information request message to the communication target nodes based on the intra-shard communication node list and the inter-shard communication node list through peer-to-peer communication, and the nodes that have received the working shard information request message share the working shard information request message with their respective intra-shard communication nodes and inter-shard communication nodes through peer-to-peer communication. In this way, the working shard information request message can be delivered to the first home shard-affiliated node.

If the current working shard information of the first moving account received from the first home shard-affiliated node does not match the destination working shard information, the working shard change request unit 414 may resend a working shard change message for the first moving account to the first destination working shard-affiliated node through the peer-to-peer communication module 403.

If the current working shard information of the first moving account received from the first home shard-affiliated node matches the destination working shard information, the account deactivation processing unit 415 deactivates the transaction chain (AWTC) of the first moving account through the account management module 401, thereby terminating the working shard change procedure of the first moving account.

Next, when a node is a home shard-affiliated node, the node activates the working shard change module 420 as the home shard-affiliated node to change the working shard of the moving account. The operation of each component of the working shard change module 420 as the home shard-affiliated node will be described. In this case, the moving account is called a second moving account, the origin working shard-affiliated node is called a second origin working shard-affiliated node, the home shard-affiliated node is called a second home shard-affiliated node, and the destination working shard-affiliated node is called a second destination working shard-affiliated node. In other words, the node may be the home shard-affiliated node of the second moving account.

The working shard information request receiving unit 421 may receive a working shard information request message requesting working shard information of the second moving account from the second origin working shard-affiliated node or the second destination working shard-affiliated node. The working shard information request message for the second moving account is generated by the second origin working shard-affiliated node or the second destination working shard-affiliated node, and may be transmitted through peer-to-peer communication.

The account directory search unit 422 may search for the second moving account in the account directory 404 to acquire the current working shard information of the second moving account.

The search result sending unit 423 may send the current working shard information of the second moving account searched in the account directory 404 to the second origin working shard-affiliated node or the second destination working shard-affiliated node through peer-to-peer communication.

The working shard information change request receiving unit 424 may receive a working shard information change request message requesting that the working shard information of the second moving account be changed to the second destination working shard from the second destination working shard-affiliated node of the second moving account.

The account directory update unit 425 verifies the received working shard information change request message and updates the working shard information of the second moving account stored in the account directory 404 from a second origin working shard to a second destination working shard.

Next, when a node is a destination working shard-affiliated node, the node activates the working shard change module 430 as the destination working shard-affiliated node to change the working shard of the moving account. The operation of each component of the working shard change module 430 as the destination working shard-affiliated node will be described. In this case, the moving account is called a third moving account, the origin working shard-affiliated node is called a third origin working shard-affiliated node, the home shard-affiliated node is called a third home shard-affiliated node, and the destination working shard-affiliated node is called a third destination working shard-affiliated node. In other words, the node may be the destination working shard-affiliated node of the third moving account.

The working shard change request receiving unit 431 may receive a working shard change message from the third origin working shard-affiliated node. The working shard change message may be generated by the working shard change request unit 414 of the third origin working shard-affiliated node and received through the peer-to-peer communication module 403.

The account recording unit 432 may record the transaction chain (AWTC) of the third moving account through the account management module 401.

The home shard information acquisition unit 433 may request the home shard information of the third moving account to the home shard calculation module 402 and receive the home shard information of the third moving account from the home shard calculation module 402. The home shard calculation unit 402 may compute the home shard information of the third moving account using a function that takes as parameters information on the address of the third moving account and information on the total number of shards in the blockchain network.

The working shard information change request sending unit 435 may generate a working shard information change request message for the third moving account and send the message to the third home shard-affiliated node based on the home shard information of the third moving account through peer-to-peer communication.

Meanwhile, the current working shard information acquisition unit 434 may generate a working shard information request message for the third moving account based on the home shard information of the third moving account and send it to the third home shard-affiliated node through the peer-to-peer communication module 403, and receive the current working shard information of the third moving account from the third home shard-affiliated node.

The working shard information change request sending unit 435 may send a working shard information change request message for the third moving account to the third home shard-affiliated node if the current working shard information of the third moving account received from the third home shard-affiliated node does not match the destination working shard information.

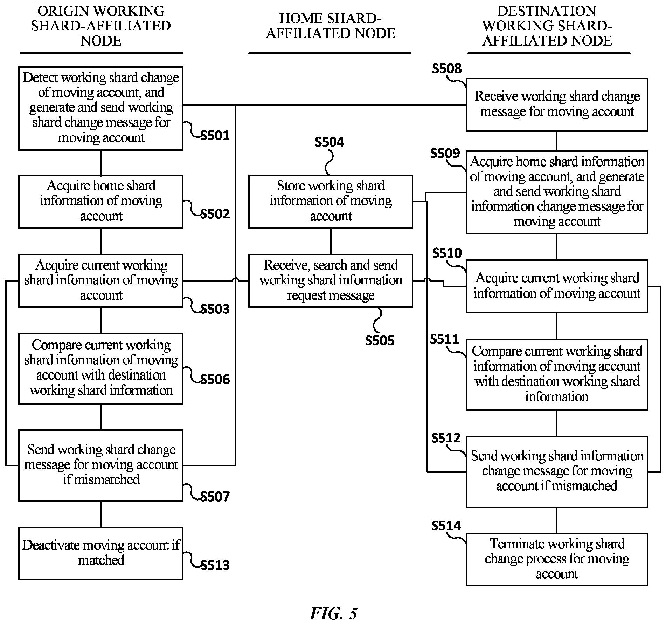

FIG. 5 is a flowchart illustrating a method for changing the working shard of an account according to one embodiment.

The operations of the exemplary process are illustrated as individual blocks and are described with reference to those blocks. The process is illustrated as a logical flow of blocks, each of which may represent one or more operations that may be implemented in hardware, software, or a combination thereof. With respect to software, the operations represent computer-executable instructions stored on one or more computer-readable media that, when executed by one or more processors, cause the one or more processors to perform the operations cited. Generally, computer-executable instructions include routines, programs, objects, modules, components, data structures, performing specific functions, or implementing specific abstract data types. The order in which the operations are described should not be construed as limiting, and the operations described may be executed in any order, subdivided into multiple sub-operations, or executed in parallel.

The origin working shard-affiliated node detects the working shard change of the moving account, generates a working shard change message for the moving account, and sends it to the destination working shard-affiliated node through peer-to-peer communication (S501).

When a preset period of time has elapsed after sending the moving account's working shard change message, the origin working shard-affiliated node acquires the home shard information of the moving account using a function that takes as parameters information on the address of the moving account and information on the total number of shards in the blockchain network (S502).

The origin working shard-affiliated node acquires the current working shard information of the moving account from the home shard-affiliated node (S503). Specifically, the home shard-affiliated node updates and manages the working shard information of the moving account in the account directory (S504). The origin working shard-affiliated node generates a working shard information request message requesting the current working shard information of the moving account and sends it to the home shard-affiliated node through peer-to-peer communication. The home shard-affiliated node receives the working shard information request message, searches the account directory for the current working shard information of the moving account, and sends the searched current working shard information of the moving account to the origin working shard-affiliated node (S505).

The origin working shard-affiliated node compares the current working shard information of the moving account obtained in step S505 with the destination working shard information (S506).

If the comparison result of step S506 shows that the current working shard information of the moving account and the destination working shard information do not match, the moving account change procedure has not been completed, so a message to change the working shard of the moving account is sent to the destination working shard-affiliated node through peer-to-peer communication (S507).

The destination working shard-affiliated node receives the working shard change message for the moving account as a result of step S501 and/or step S507 (S508).

The destination working shard-affiliated node obtains the home shard information of the moving account using a function that takes as parameters information on the address of the moving account and the total number of shards in the blockchain network, and generates a working shard information change message for the moving account and sends it to the home shard-affiliated node through peer-to-peer communication (S509).

When a preset period of time has elapsed after sending the working shard information change message for the moving account to the home shard-affiliated node, the destination working shard-affiliated node obtains the current working shard information of the moving account from the home shard-affiliated node (S510). Specifically, the destination working shard-affiliated node generates a working shard information request message requesting the current working shard information of the moving account, and sends it to the home shard-affiliated node through peer-to-peer communication. The home shard-affiliated node receives the working shard information request message, searches the account directory for the current working shard information of the moving account, and sends the searched current working shard information of the moving account to the destination working shard-affiliated node (S505).

The destination working shard-affiliated node compares the current working shard information of the moving account obtained in step S510 with the destination working shard information (S511).

If the comparison result of step S511 shows that the current working shard information of the moving account and the destination working shard information do not match, the moving account change procedure has not been completed, so a message to change the working shard information of the moving account is generated to be sent to the home shard-affiliated node through peer-to-peer communication (S512), and after a preset period of time has elapsed, step S510 is repeated.

In step S509 or step S512, the home shard-affiliated node that has received the message to change the working shard information of the moving account from the destination working shard-affiliated node performs step S504 to update the working shard information of the moving account stored in the account directory with the destination working shard information.

In this way, in a state where the current working shard information of the moving account stored in the home shard-affiliated node is changed to the destination working shard information, when the origin working shard-affiliated node obtains the current working shard information (S503) and compares the current working shard information with the destination working shard information (S506), the two pieces of information match, and when the two pieces of information match, the moving account is deactivated and the working shard change process of the moving account is terminated (S513).

In addition, in a state where the current working shard information of the moving account stored in the home shard-affiliated node is changed to the destination working shard information, when the destination working shard-affiliated node obtains the current working shard information (S510) and compares the current working shard information with the destination working shard information (S511), the two pieces of information match, and when the two pieces of information match, the working shard change process for the moving account is terminated (S514).

All of the methods and processes described above may be implemented and fully automated as software code modules executed by one or more general-purpose computers or processors. The code modules may be stored on any type of computer readable storage medium or other computer storage device. Some or all of the methods may be implemented using specialized computer hardware.

Any routine descriptions, elements or blocks of the flowchart described herein and/or illustrated in the accompanying drawings should be understood to potentially represent code, modules, segments or portions that include one or more executable instructions for implementing a particular logical function or element. Alternative examples fall within the scope of the examples described herein, and based on the functions understood herein, elements or functions may be deleted or executed in the order in which they are illustrated or discussed, substantially synchronously or in reverse order.

Many variations and modifications may be made to the above-described embodiments, and it should be understood that each component is just one of alternative acceptable examples. All such modifications and variations are intended to be included within the scope of the present disclosure and protected by the following claims. The embodiments of the present disclosure described above may be implemented in the form of program instructions that can be executed by various computer components and recorded on a computer-readable recording medium. The computer-readable recording medium may include program instructions, data files, data structures, etc., either singly or in combination. The program instructions recorded on the computer-readable recording medium may be those specially designed and configured for the present disclosure or may be known and available to those skilled in the field of computer software. Examples of the computer-readable recording medium include magnetic media such as hard disks, floppy disks, and magnetic tapes, optical recording media such as CD-ROMs, DVDs, magneto-optical media such as floptical disks, and hardware devices specifically configured to store and execute program instructions such as ROMs, RAMs, flash memories, and the like. Examples of program instructions include not only machine language codes such as those generated by a compiler, but also high-level language codes that can be executed by a computer using an interpreter or the like. The hardware device may be configured to operate as one or more software modules to perform processing according to the present disclosure, and vice versa.

While the present disclosure has been described above with specific details such as specific components, limited embodiments and drawings, these have been provided only to help a more general understanding of the present disclosure, and the present disclosure is not limited to the above embodiments, and various modifications and variations may be made by those having ordinary skill in the art to which the present disclosure pertains.

Accordingly, the idea of the present disclosure should not be limited to the embodiments described above, and all modifications equivalent to or equivalent to the following claims as well as the claims are included in the scope of the idea of the present disclosure.

## Claims

1. A system for changing a working shard of an account in a blockchain network on a node constituting the blockchain network, wherein:
the node is a node affiliated with an origin working shard of a first moving account, and communicates with a first home shard-affiliated node of the first moving account and a first destination working shard-affiliated node of the first moving account to perform a working shard change procedure for the first moving account, and
the node comprises:
a working shard change detection unit that detects whether a working shard of the first moving account is changed; and
a working shard change request unit that requests a working shard change for the first moving account to the first destination working shard-affiliated node.

2. The system of claim 1, wherein the node further comprises:
a home shard information acquisition unit that acquires home shard information of the first moving account; and
a current working shard information acquisition unit that acquires current working shard information of the first moving account from the first home shard-affiliated node based on the home shard information of the first moving account, and
wherein the working shard change request unit requests a working shard change for the first moving account to the first destination working shard-affiliated node when the current working shard information of the first moving account does not match destination working shard information of the first moving account.

3. The system of claim 2, wherein the node further comprises an account deactivation processing unit that deactivates a transaction chain of the first moving account and terminates the working shard change procedure for the first moving account when the current working shard information of the first moving account matches the destination working shard information of the first moving account.

4. The system of claim 2, wherein the home shard information acquisition unit acquires the home shard information of the first moving account using a function that takes as parameters information on an address of the first moving account and information on a total number of shards in the blockchain network.

5. The system of claim 1, wherein the node communicates with the first home shard-affiliated node and the first destination working shard-affiliated node through peer-to-peer communication.

6. The system of claim 1, wherein the node is a node affiliated with a home shard of a second moving account, and communicates with a second origin working shard-affiliated node of the second moving account and a second destination working shard-affiliated node of the second moving account to perform a working shard change procedure for the second moving account, and
the node further comprises:
a working shard information request receiving unit that receives a request for current working shard information of the second moving account from at least one information request node of the second origin working shard-affiliated node and the second destination working shard-affiliated node;
an account directory search unit that searches an account directory for the current working shard information of the second moving account;
a search result sending unit that sends the current working shard information of the second moving account searched by the account directory search unit to the information request node;
a working shard information change request receiving unit that receives a working shard information change request from the second destination working shard-affiliated node; and
an account directory update unit that changes the current working shard information of the second moving account in the account directory to destination working shard information of the second moving account.

7. The system of claim 6, wherein the node communicates with the second origin working shard-affiliated node and the second destination working shard-affiliated node through peer-to-peer communication.

8. The system of claim 1, wherein the node is a node affiliated with a destination working shard of a third moving account, and communicates with a third origin working shard-affiliated node of the third moving account and a third home shard-affiliated node of the third moving account to perform a working shard change procedure for the third moving account, and
the node further comprises:
a working shard change request receiving unit that receives a working shard change request for the third moving account from the third origin working shard-affiliated node of the third moving account;
an account recording unit that records a transaction chain of the third moving account;
a home shard information acquisition unit that acquires home shard information of the third moving account; and
a working shard information change request sending unit that sends a working shard information change request to the third home shard-affiliated node based on the home shard information of the third moving account.

9. The system of claim 8, wherein the node further comprises a current working shard information acquisition unit that acquires current working shard information of the third moving account from the third home shard-affiliated node based on the home shard information of the third moving account, and
the working shard information change request sending unit sends a working shard information change request to the third home shard-affiliated node when the current working shard information of the third moving account and destination working shard information of the third moving account do not match.

10. The system of claim 8, wherein when current working shard information of the third moving account matches destination working shard information of the third moving account, the node terminates the working shard change procedure for the third moving account.

11. The system of claim 8, wherein the home shard information acquisition unit acquires the home shard information of the third moving account using a function that takes as parameters information on an address of the third moving account and information on a total number of shards in the blockchain network.

12. The system of claim 8, wherein the node communicates with the third origin working shard-affiliated node and the third home shard-affiliated node through peer-to-peer communication.

13. A method for changing a working shard of an account in a blockchain network, implemented by at least one processor on a node constituting the blockchain network, wherein the node is a node affiliated with an origin working shard of a first moving account, and communicates with a first home shard-affiliated node of the first moving account and a first destination working shard-affiliated node of the first moving account to perform a working shard change procedure for the first moving account, the method comprising:
detecting whether a working shard of the first moving account is changed; and
requesting a working shard change for the first moving account to the first destination working shard-affiliated node.

14. The method of claim 13, further comprising:
acquiring home shard information of the first moving account;
acquiring current working shard information of the first moving account from the first home shard-affiliated node based on the home shard information of the first moving account; and
requesting a working shard change for the first moving account to the first destination working shard-affiliated node when the current working shard information of the first moving account does not match destination working shard information of the first moving account.

15. The method of claim 14, further comprising deactivating a transaction chain of the first moving account and terminating the working shard change procedure for the first moving account when the current working shard information of the first moving account matches the destination working shard information of the first moving account.

16. The method of claim 14, wherein the acquiring of home shard information of the first moving account includes acquiring the home shard information of the first moving account using a function that takes as parameters information on an address of the first moving account and information on a total number of shards in the blockchain network.

17. The method of claim 13, wherein the node communicates with the first home shard-affiliated node and the first destination working shard-affiliated node through peer-to-peer communication.

18. The method of claim 13, wherein the node is a node affiliated with a home shard of a second moving account, and communicates with a second origin working shard-affiliated node of the second moving account and a second destination working shard-affiliated node of the second moving account to perform a working shard change procedure for the second moving account, and
the method further comprises:
receiving a request for current working shard information of the second moving account from at least one information request node of the second origin working shard-affiliated node and the second destination working shard-affiliated node;
searching an account directory for the current working shard information of the second moving account;
sending the searched current working shard information of the second moving account to the information request node;
receiving a working shard information change request from the second destination working shard-affiliated node; and
changing the current working shard information of the second moving account in the account directory to destination working shard information of the second moving account.

19. The method of claim 18, wherein the node communicates with the second origin working shard-affiliated node and the second destination working shard-affiliated node through peer-to-peer communication.

20. The method of claim 13, wherein the node is a node affiliated with a destination working shard of a third moving account, and communicates with a third origin working shard-affiliated node of the third moving account and a third home shard-affiliated node of the third moving account to perform a working shard change procedure for the third moving account, and
the method further comprises:
receiving a working shard change request for the third moving account from the third origin working shard-affiliated node of the third moving account;
recording a transaction chain of the third moving account;
acquiring home shard information of the third moving account; and
sending a working shard information change request to the third home shard-affiliated node based on the home shard information of the third moving account.

21. The method of claim 20, further comprising:
acquiring current working shard information of the third moving account from the third home shard-affiliated node based on the home shard information of the third moving account; and
sending a working shard information change request to the third home shard-affiliated node when the current working shard information of the third moving account and destination working shard information of the third moving account do not match.

22. The method of claim 21, wherein when the current working shard information of the third moving account matches the destination working shard information of the third moving account, the working shard change procedure for the third moving account is terminated.

23. The method of claim 20, wherein the acquiring of home shard information of the third moving account includes acquiring the home shard information of the third moving account using a function that takes as parameters information on an address of the third moving account and information on a total number of shards in the blockchain network.

24. The method of claim 20, wherein the node communicates with the third origin working shard-affiliated node and the third home shard-affiliated node through peer-to-peer communication.
